# EUROPEAN PATENT APPLICATION

(11) **EP 1 201 277 A2**
(43) Date of publication of application: **02.05.2002**
(21) Application number: 01125368.9
(22) Date of filing: 30.10.2001
(51) Int. Cl.: A63F 13/10

(54) **Entertainment apparatus and method for reflecting input voice in operation of character**

(30) Priority: 30.10.2000 JP 2000330800
(71) Applicant: Sony Computer Entertainment Inc., Tokyo 107-0052 (JP)
(72) Inventor: Terasawa, Kenji, Minato-ku, Tokyo 107-0052 (JP); Shirasu, Noboru, Minato-ku, Tokyo 107-0052 (JP)
(74) Representative: Müller . Hoffmann & Partner Patentanwälte

(57) **Abstract**

A sound interval and a sound volume are extracted from the voice of a player inputted through a microphone, to grip changes in the sound interval and the sound volume in words. The difference between these data and reference data recorded in reference voice data 303 is calculated, and the inputted words are evaluated on the basis of the difference. With respect to a character as an operating object of the player, the contents of an operation of the character are determined by the evaluation, and the character reacts in real time. Thus, a game is realized in which the character makes real-time reactions to voice inputs from the player.

## Description

### Technical Field

The present invention relates to entertainment apparatus and method for reflecting a voice input from a player in the operation of a character.

### Background of the Invention

In a game played with an entertainment apparatus, etc., there are many cases in which a player gives commands to a player character, etc. as an operating object by using an input device such as a controller, a keyboard, etc. However, in recent years, there has appeared a game in which a player gives commands with a voice input device such as a microphone, etc.

In such a game, for example, the contents of an input voice of the player are judged with voice recognition techniques such as analysis of a voice spectrum, pattern matching with a standard pattern, etc., and the character is made to take an action corresponding to the input voice of the player, to advance the game.

### Disclosure of the Invention

However, it is a large burden on the device to recognize the voice, particularly, to interpret words of the player, and reflect its contents in the game, and it takes time in processing, which sometimes becomes a neck of a smooth advancement of the game. In particular, a big problem is caused when the voice input is applied to a game in which the character appearing in the game makes a real-time reaction to the voice of the player.

Therefore, the game using the voice input is limited mainly to games giving no importance to a real-time property, in which the player and the character have a talk and the character is a bit slow in giving an answer to the voice input of the player or taking action. There is therefore caused a problem of deficiency in diversification.

An object of the invention is to provide a game in which the character makes a real-time reaction to the voice input.

For overcoming the above problems, the present invention provides the following entertainment apparatus. Namely, it is an entertainment apparatus to which a voice input device for receiving a voice input from a player is connectable or provided, and which comprises character control means for controlling the operation of a game character; sound interval extracting means for extracting information of a relative sound interval from the voice of the player received through said voice input device; and sound volume extracting means for extracting information of a sound volume from the voice of the player received through said voice input device; wherein said character control means makes the character perform an operation on the basis of said extracted information of the relative sound interval and said extracted information of the sound volume.

Since processing is performed by extracting the information of the sound volume and the sound interval from the player voice as described above, a game can be smoothly advanced without imposing an excessive burden on the entertainment apparatus.

Further, this entertainment apparatus can further comprise guide display means for outputting contents of the voice to be inputted by the player.

Further, there may further employ a constitution in which the entertainment apparatus further comprises reference voice data storage means for storing voice data as an evaluation reference about the relative sound interval and the sound volume with respect to the voice to be inputted by the player, and said character control means periodically compares said extracted information of the relative sound interval and said extracted information relative to the sound volume with the voice data as said evaluation reference, and determines operation contents of the character on the basis of results of the comparison.

Further, the operation of said character is shown by regenerating image data prepared in advance, and said character control means can change a regenerating speed of said image data on the basis of a difference between timing for outputting contents of the voice to be inputted by said player and timing for starting the input of the voice by the player.

Further, there can be employed a constitution in which said character control means compares said extracted information of to the relative sound interval and the voice data of the relative sound interval as said evaluation reference, to exaggerate an expression of the character as the extracted relative sound interval is higher than the relative sound interval as an evaluation reference, and to moderate the expression of the character as the extracted relative sound interval is lower than the relative sound interval as an evaluation reference as a result of this comparison, and said character control means compares said extracted information of the sound volume and the voice data of said sound volume as an evaluation reference, to exaggerate a behavior of the character as the extracted sound volume is larger than the sound volume as the evaluation reference, and to moderate the behavior of the character as the extracted sound volume is smaller than the sound volume as an evaluation reference.

### Brief Description of the Drawings

Fig. 1 is a block diagram for explaining the construction of the voice input operating system in the present embodiment.
Fig. 2 is a graph showing one example of changes in a sound interval and a sound volume when words are inputted by a voice.
Fig. 3 is a graph showing one example of the relationship between a player voice and a reference voice with respect to the changes in the sound interval and the sound volume.
Fig. 4 is a graph showing a difference between the player voice and the reference voice with respect to the changes in the sound interval and the sound volume.
Fig. 5 is a view showing a summary of the evaluation of an input voice evaluating function 2013 when sound volume evaluation is used as an example.
Figs. 6A to 6D are views showing an example of a change in operation of a character caused by a change in parameter.
Fig. 7 is a flow chart for explaining a processing flow when words are received from a player.
Fig. 8 is a block diagram for explaining the hardware construction of an entertainment apparatus 10.
Fig. 9 is a view for explaining a use state of the entertainment apparatus 10.

### Best Mode for Carrying Out the Invention

The embodiment modes of the present invention will be explained in detail with reference to the drawings.

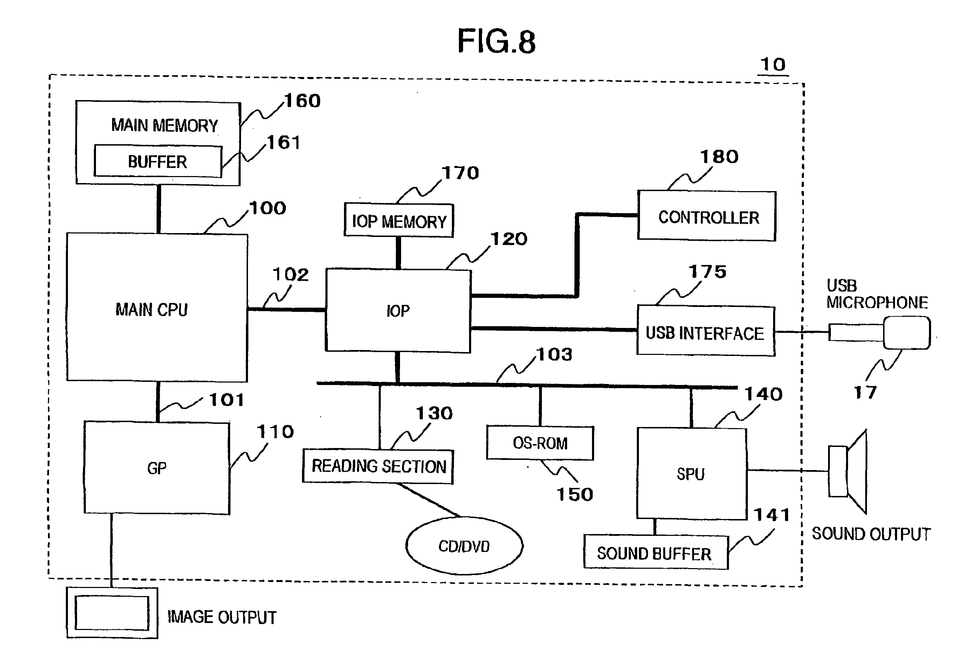

First, the hardware constitution of an entertainment apparatus 10 including a voice input operating system in an embodiment mode of the present invention will be explained with reference to a block diagram shown in Fig. 8.

In this figure, the entertainment apparatus 10 has a main CPU 100, a graphics processor (GP) 110, an I/O processor (IOP) 120, a CD/DVD reading section 130, a sound processor unit (SPU) 140, a sound buffer 141, an OS-ROM 150, a main memory 160, an IOP memory 170 and a USB interface 175.

The main CPU 100 and the GP 110 are connected through an exclusive bus 101. The main CPU 100 and the IOP 120 are connected through a bus 102. The IOP 120, the CD/DVD reading section 130, the SPU 140 and the OS-ROM 150 are connected to a bus 103.

A main memory 160 is connected to the main CPU 100, and an IOP memory 170 is connected to the IOP 120. Further, a controller 180 and a USB interface 175 are connected to the IOP 120.

The main CPU 100 execute a program stored in the OS-ROM 150, or a program transferred from a CD/DVD-ROM, etc. to the main memory 160, to perform predetermined processing.

The GP 110 is a drawing processor for fulfilling a rendering function, etc. of the present entertainment apparatus, and performs drawing processing in accordance with commands from the main CPU 100.

The IOP 120 is a sub-processor for input-output for controlling transmission and reception of data between the main CPU 100 and a peripheral device, e.g., the CD/DVD reading section 130, the SPU 140, etc.

The CD/DVD reading section 130 reads data from a CD-ROM and a DVD-ROM mounted on a CD/DVD drive, and transfers these data to a buffer area 161 arranged in the main memory 160.

The SPU 140 regenerates compressed waveform data, etc., stored in the sound buffer 141 at a predetermined sampling frequency on the basis of pronouncing instructions from the main CPU 100, etc.

The OS-ROM 150 is a non-volatile memory storing a program, etc. executed by the main CPU 100 and the IOP 120 at a starting time.

The main memory 160 is a main memory device of the main CPU 100, and stores instructions executed by the main CPU 100, data utilized by the main CPU 100, etc. Further, the main memory 160 is provided with the buffer area 161 for temporarily storing data read from a recording medium such as CD-ROM, DVD-ROM, etc.

The IOP memory 170 is a main memory device of the IOP 120, and stores instructions executed by the IOP 120, data utilized by the main CPU 100, etc.

The controller 180 is an interface for receiving commands from an operator.

A USB microphone 17 is connected to the USB interface 175. When the voice of a player is inputted to the USB microphone 17, the USB microphone 17 performs A/D conversion, etc., using a predetermined sampling frequency and a quantized bit number, and sends voice data to the USB interface 175.

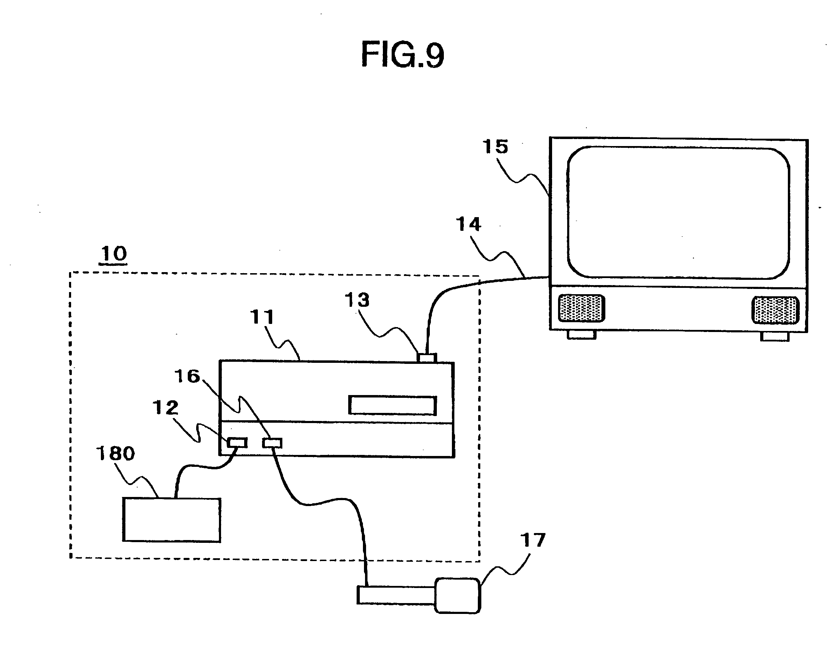

Fig. 9 is a view for explaining a use state of the entertainment apparatus 10. In this figure, the controller 180 is connected to a connector portion 12 of an entertainment apparatus main body 11. A cable 14 for an image voice output is connected to an image voice output terminal 13 of the entertainment apparatus main body 11. An image voice output device 15 of a television receiver, etc., is connected to the other end of this cable 14. An operator of the entertainment apparatus gives operation instructions with the controller 180. The entertainment apparatus 10 receives commands from the operator through the controller 180, and outputs image data and voice data corresponding to these commands to the image voice output device 15. The image voice output device 15 outputs an image and a voice.

The USB microphone 17 is connected to the USB connector 16 of the entertainment apparatus main body 11, and receives the voice input from the player.

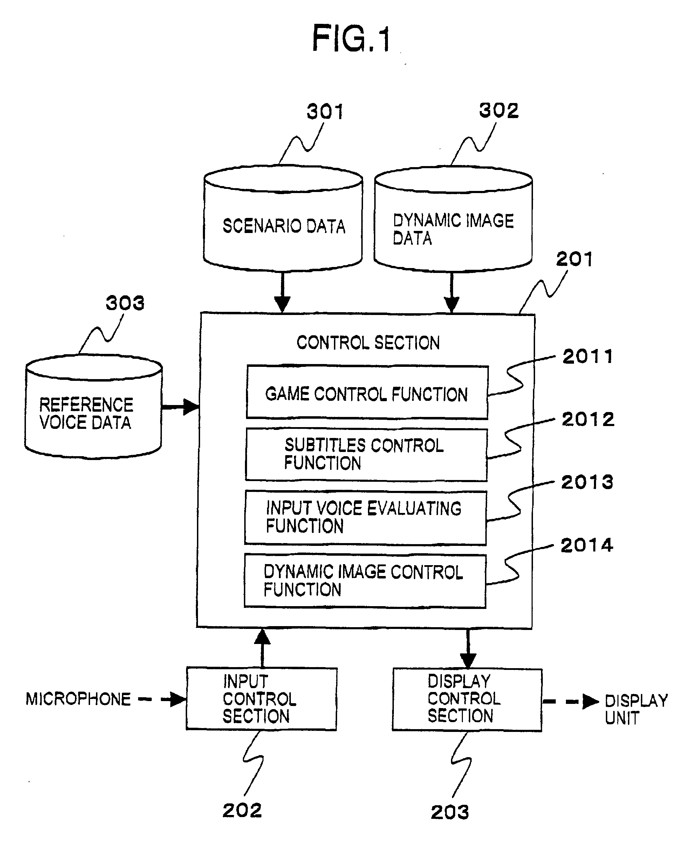

The constitution of the voice input operating system of this embodiment will be explained with reference to the block diagram of Fig. 1 hereinafter. As shown in Fig. 1, the voice input operating system is constituted of a control section 201, an input control section 202, a display control section 203, scenario data 301, dynamic image data 302 and reference voice data 303.

The control section 201 has a game control function 2011, a subtitles control function 3012, an input voice evaluating function 2013 and a dynamic image control function 2014. The main CPU 100 mainly executes a program stored in the main memory 160, etc. so that the control section 201 is constructed on the main CPU 100, etc., to realize the respective functions.

In the game control function 2011, the control section 201 performs processing for reading the scenario data 301 and advancing a game on the basis of a predetermined story.

The above scenario data 301 are data read from the memory medium such as CD-ROM, DVD-ROM, etc., as required. For example, the scenario data 301 recorded data of a story development, subtitles data of words to be inputted by the player, and data of the response of a character to an input of the player, etc. These data are managed with an index, etc., attached thereto, and are displayed and regenerated in conformity with the story development with using this index as a key.

In the subtitles control function 3012, the control section 201 performs processing for displaying subtitles recorded in the scenario data 301 in association with a scene in the story development, on a display unit through the display control section 203. These subtitles play a role as a guide for urging the player to the voice input of words. Characters to be voice-inputted by the player at a certain time are displayed on the display unit by performing highlight processing, etc. (as in the guide display of singing words in "karaoke") so as to make the player understand contents of the characters.

In the input voice evaluating function 2013, the control section 201 evaluates the voice data inputted by the player through a voice input device such as a microphone, etc. in comparison with a reference voice recorded in the reference voice data 303.

Specifically, a fundamental frequency (the height of a sound) is extracted from the voice inputted by the player with an FFT, etc. (this can be realized in software, and can be constructed, e.g., within the control section 201) at predetermined intervals such as one tenth second, and a sound volume (sound pressure) is measured. An element for gripping the height of the sound is not limited to the extraction of the fundamental frequency, and, for example, a second formant of a voice spectrum, etc., may be also extracted and gripped.

In the voice inputted by the player, one phrase, i.e., words continuously inputted are to be used as one unit. This unit is displayed in one block in the subtitles, so that the player can recognize it.

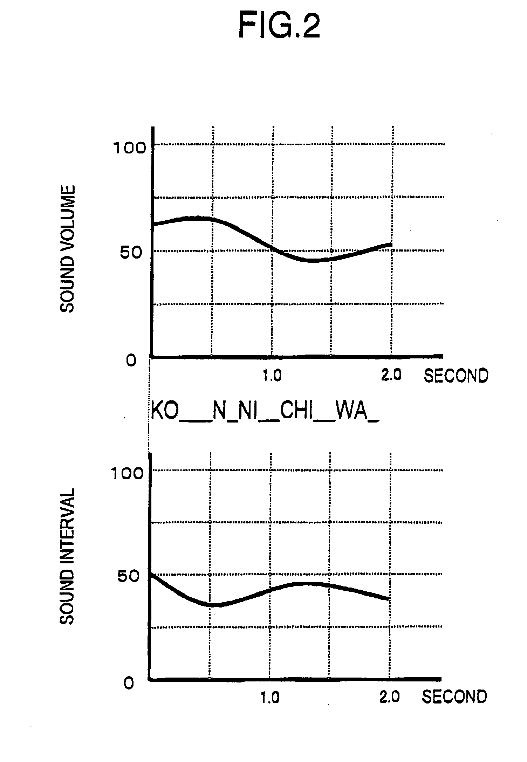

Fig. 2 is a graph showing one example of changes in the fundamental frequency and the sound volume when a word of "Kon-nichiwa (Hello)" is inputted by voice. When a time interval of the above word of the player is two seconds, the number of measuring points is 20, and the fundamental frequency and the sound volume become twenty time series data. It is assumed that both the above fundamental frequency and the above sound volume are represented by values from 0 to 100, that the fundamental frequency is converted to a relative amount with a first measuring point as 50, and that the sound volume is represented as an absolute amount. Naturally, these values are not required to be strict, and these values may be set to such an extent that the degrees of changes in the fundamental frequency and the sound volume can be gripped.

As can be seen from this figure, this system is arranged to grip the sound volume and the sound interval of the player voice are gripped, but not arranged to judge any pronunciation. For example, when the same time is taken to input "Koon-nichwa" and "Kon-nichiiwa" in the same sound volume change and the same intonation change in time, the system grips these inputted voices as the same voices. Further, it is also similar when "Ah ---" is inputted.

Since no pronunciation is evaluated in this system as described above, a game can be executed without imposing any excessive burden on processing although the voice input is treated. Namely, in general, the sound interval and the sound volume are easily extracted and approximately real-time extraction can be made, so that no or little influence is almost exerted on the processing speed of the game.

The reference voice data 303 records voice data as a reference of the evaluation of the word inputted by the player, and has data converted from the change in the fundamental frequency and the change in the sound volume sampled at predetermined intervals mentioned above.

When the input voice evaluating function 2013 detects the extraction of the reference voice corresponding to the word to be inputted by the player from the reference voice data 303 and the start of voice input from the player, it calculates the difference in voice is calculated and evaluates it every predetermined period with using a starting time point of the word as a reference.

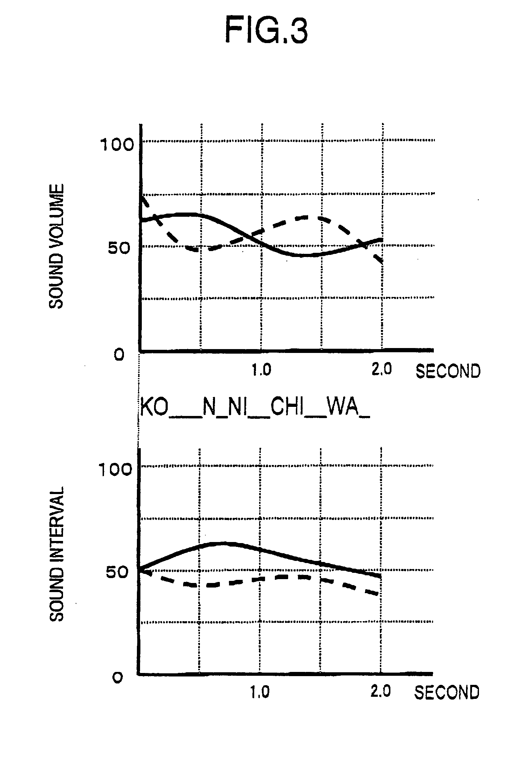

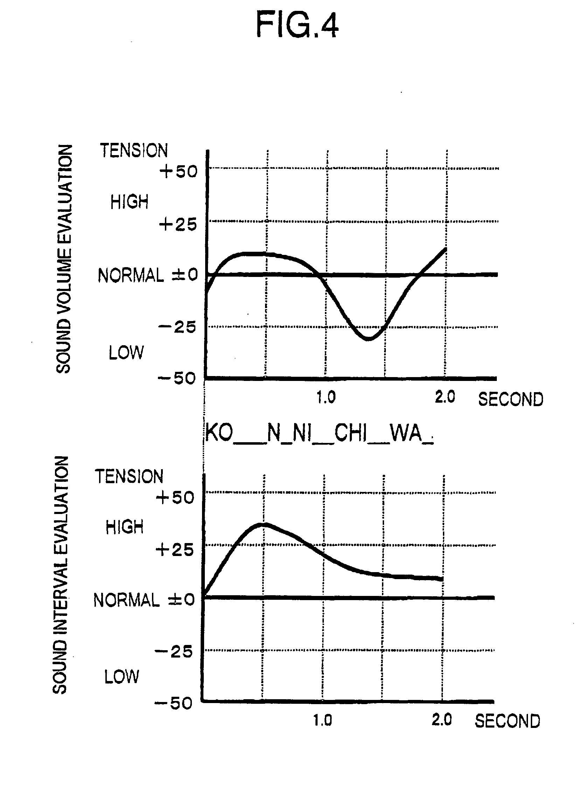

For example, when the reference voice data 303 of the word "Kon-nichwa" are shown by a broken line of the graph shown in Fig. 3 and input data of the player are shown by a solid line, this differences are provided as shown in Fig. 4.

In the input voice evaluating function 2013, the input voice is evaluated on the basis of this difference at intervals of a predetermined period.

The change in the fundamental frequency is gripped as a change in height of the word, i.e., intonation, and the evaluation based on the difference between the voice of the player and the reference voice is reflected in a change in expression of a character. The change in the fundamental frequency is determined to be a relative amount, since the difference in fundamental height between individual voices is taken into account.

The change in the sound volume is gripped as an empathy degree, and the evaluation based on the difference (tension value) between the voice of the player and the reference voice is reflected in a change in behavior of hands, feet, etc., of the character.

In the graph shown in Fig. 4, the evaluation reference is determined such that the tension increases in height as the value of the voice of the player in value as compared with the reference voice increases, and the tension decreases as the value of voice of the player as compared with the reference voice decreases. Further, the tension degree is arranged to increase as plus and minus degrees are increased.

In the example shown in Fig. 4, the tension is changed between the high tension and the low tension within the word in the sound volume evaluation, and the tension as a whole is high in the sound interval change.

In the input voice evaluating function 2013, the above evaluation is carried out at intervals of a predetermined period and is also carried out for each phrase. This evaluation is carried out as to how far the input voice as the entire word of "Kon-nichiwa" is separated from the reference voice. For example, in Fig. 4, the distance (an absolute value of the difference between the player voice and the reference voice at each measuring point) from a line of ±0 is calculated with respect to a value of the difference every predetermined period, and a total sum of this distance can be evaluated. In the evaluation, as the absolute value decreases, the player voice is closer to the reference voice, so that a high evaluation is given.

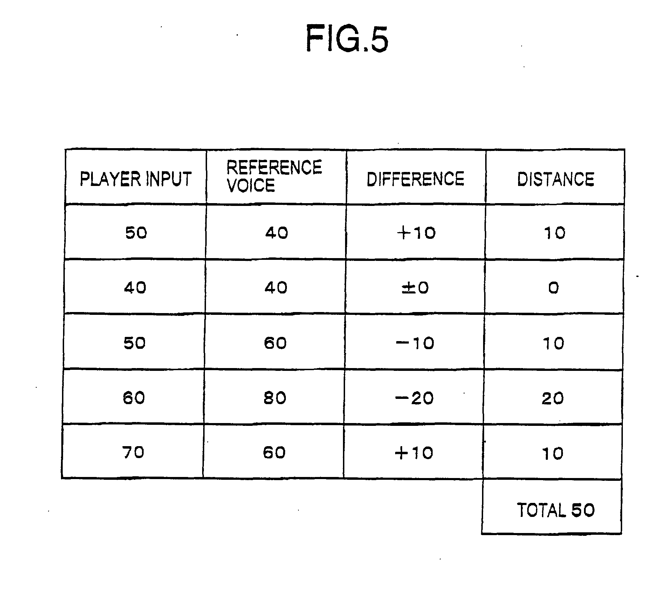

Fig. 5 summarizes the evaluation in the above input voice evaluating function 2013 with using the sound volume evaluation as an example. For simplification, it is supposed that the evaluation is carried out at five measuring points. In this figure, the tension value as the differences between the player input voice and the reference voice in all the measuring points, i.e., at intervals of a predetermined period changes like +10, ±0, -10, -20, +10, and the evaluation of a phrase becomes 50 as a total of the distances (absolute values).

For example, there may be employed a constitution in which, when the termination of the player input voice and the termination of the reference voice do not occur at the same time, and if one of the player input voice and the reference voice is terminated earlier, the evaluation at intervals of a predetermined period is terminated upon termination of one of them, and the phrase evaluation is arranged to give a bad evaluation upon termination of one of them on the assumption that that the speed of the word is not accurate and that the subsequent difference is a maximum value.

In the dynamic image control function 2014, there is performed a processing for reading the dynamic image data 302 recording the operation of the character and reflecting evaluation results of the input voice evaluating function 2013 in the operation of the character.

The above dynamic image data 302 are data that are read from a recording medium such as CD-ROM, DVD-ROM, etc., as required, and the dynamic image data 302 record data of the operation of the character in accordance with the story development. The data of the operation of the character recorded in the dynamic image data 302, particularly, the character of an operating object of the player are arranged such that movements for expressing a look, feeling, etc., e.g., the size of eyes, the opening degree of a mouth, the magnitude of a gesture, etc., can be changed by parameters showing states.

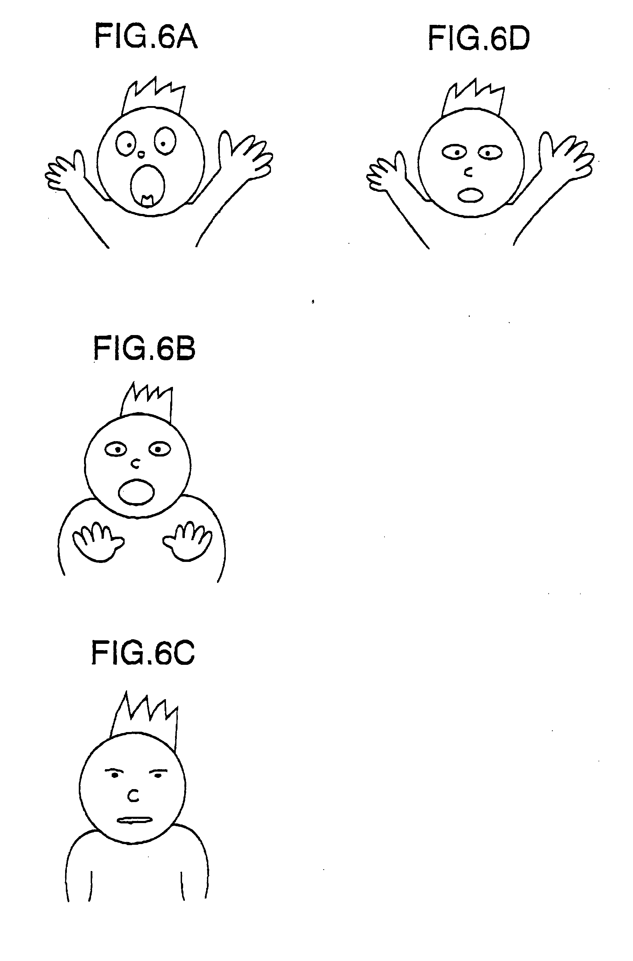

For example, when data of operation of the character that is to be "surprised" are recorded as the dynamic image data 302, parameters for the size of the eye, the opening degree of the mouth and the movement of a hand can be changed. The content of the parameters permits adoption of one of three states of "exaggeration", "usual" and "moderate". Fig. 6 shows examples of a change in the operation of the character caused by a change in the parameters in this case.

Fig. 6A shows a character operation when all of the size of the eye, the opening degree of the mouth and the movement of the hand are set to "exaggeration". Fig. 6B shows a character operation when all of the size of the eye, the opening degree of the mouth and the movement of the hand are set to "usual". Fig. 6C shows a character operation when all of the size of the eye, the opening degree of the mouth and the movement of the hand are set to "moderate". Fig. 6D shows a character operation when the size of the eye and the opening degree of the mouth are set to "usual" and the movement of the hand is set to "exaggeration".

The operation of the character can be thus changed on the basis of a combination of the parameters in the dynamic image control function 2014.

The input control section 202 performs the control of an input voice signal from a microphone connected as an input device, etc.

The display control section 203 is constructed on the GP 110 in accordance with commands of the main CPU 100, etc., and generates display screen data on the basis of screen data in which image data received from the control section 201 are transferred from a game processing section 802. The generated display screen data are outputted to a display unit, and the display unit receiving these displays an image on the display screen according to the display screen data.

The operation of the entertainment apparatus 10 in this embodiment will be explained below.

When a game is started, the control section 201 reads scenario data 301, and regenerates dynamic image data 302 associated with the scenario. When a scene appears in which a character in charge of a player says words, subtitles of the words is displayed to urge the player to input a voice.

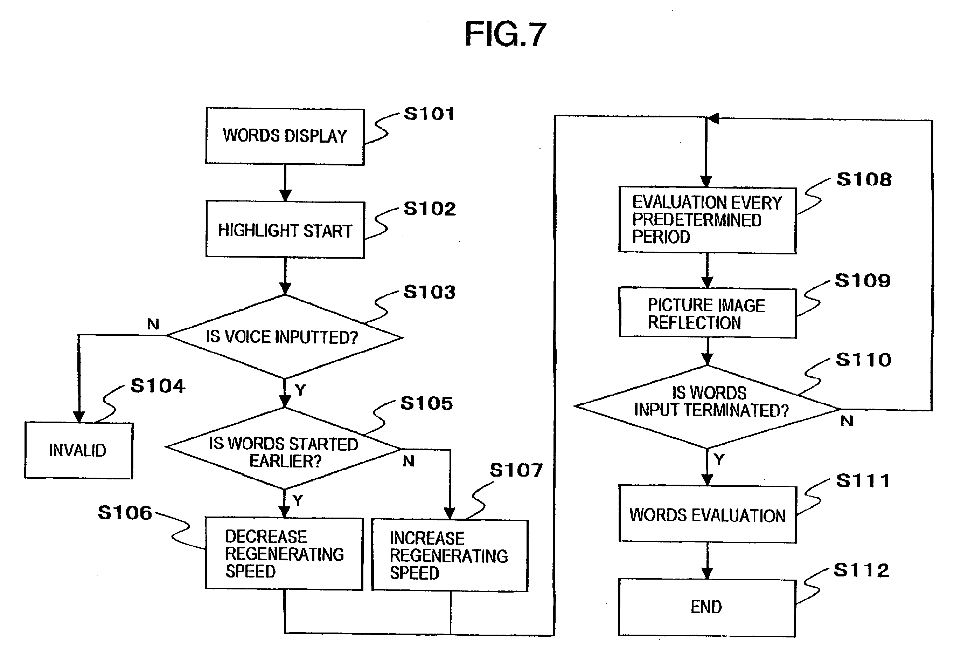

Fig. 7 is a flow chart for explaining a processing flow in the above case.

First, as described above, the control section 201 causes the display unit to display words to be inputted by the player through the display control section 203 (S101).

The control section 201 then highlights characters to be read with respect to these subtitles, to urge the player to input a voice (S102).

The player is to input words in conformity with this highlight display.

Information on the input of the words may be also displayed in conformity with these subtitles. For example, when a scene is an impact-giving scene and a reference voice is recorded in exaggeration, the guide of an expression of "exaggeration" is displayed to impose the input of exaggerated words on the player. At this time, the player inputs the words in accordance with the guide of the expression, to obtain high evaluation.

When the player starts to input the words within predetermined time periods before and after a time point of the highlighted display of a first character of the subtitles, e.g., in a range within one second or two seconds, the control section 201 treats this input of the words as a valid input (S103). When the words input is started before or after this range, the control section 201 treats the words input as an invalid input, and reduces the evaluation with respect to the input (S104).

When the input of the words is started within the above valid period, and when a starting time point of the input of the words comes earlier than the time point of the highlighted display of the first character of the subtitles, the control section 201 regenerates the dynamic image data 302 associated with the scenario related to the input of the words at a decreased regenerating speed of the dynamic image data 302 (S106). In contrast, when the starting time point of the input of the words comes later than the time point of the highlighted display of the first character of the subtitles, the control section 201 regenerates the dynamic image data 302 associated with the scenario related to the input of the words at an increased regenerating speed of the dynamic image data 302 (S107). The degrees of increasing and decreasing the regenerating speed are proportional to the difference between the time point of the highlighted display of the first character of the subtitles and the starting time point of the input of the words.

Namely, even when the word input starting time point of the player is shifted from the starting time point of the subtitles, the control section 201 adjusts termination timing of these words and termination timing of the operation of the character with respect to these words such that these timings agree with each other.

The control section 201 carries out the above evaluation with respect to the voice input of the player at intervals of a predetermined period, e.g., at intervals of one tenth second (S108). The control section 201 then instantly adjusts the operation of the character on the basis of this evaluation, and reflects the evaluation in a picture image (S109). The control section 201 repeats this operation until the voice input of the player is terminated (S110).

The above processing will be explained.

The control section 201 calculates differences in sound volume and sound interval between the player voice and the reference voice at intervals of a predetermined period as described above. The control section 201 uses values of these differences as a sound volume tension value and a sound interval tension value, respectively.

In the dynamic image data 302, the tension values and parameters of the operation of the character are associated with each other. For example, when the operation of the character that is "surprised" is performed, the sound volume tension value is associated with the movement of hands of the character. When the sound volume tension value is smaller than -25, "moderate" is set. When the sound volume tension value is -25 or more and is smaller than +25, "usual" is set When the sound volume tension value is +25 or more, "exaggeration" is set.

Further, the sound interval tension value is associated with the size of the eyes and the opening degree of the mouth of the character. When the sound interval tension value is smaller than -25, "moderate" is set. When the sound interval tension value is -25 or more and is smaller than +25, "usual" is set. When the sound interval tension value is +25 or more, "exaggeration" is set.

The control section 201 calculates the sound volume tension value and the sound interval tension value at intervals of a predetermined period, and determines parameter contents of the operation on the basis of these values. For example, when the sound volume tension is +30 and when the sound interval tension is +10, the movement of the hands is "exaggeration", and the size of the eye and the opening degree of the mouth are "usual".

The control section 201 generates an image corresponding to these parameter contents, and causes the display unit to display the image through the display control section 203.

The above processing is performed at intervals of a predetermined period until the input of words by the player is terminated, whereby the character can be caused to perform an operation that is a real-time reaction to the input by the player. The words to be inputted by the player are taken in the unit of one phrase. There is therefore employed a constitution in which, when there is no voice from the player for a predetermined period of time, e.g., 0.5 second, after the start of input of the voice is detected, it is judged that the input of words is terminated.

When the input of words by the player is terminated, the control section 103 evaluates the entire words as described above (S111). This evaluation is an evaluation showing how close to the fundamental voice the voice can be inputted. For example, there is employed a constitution in which these evaluations are accumulated through a certain story, and as a result, when a certain evaluation cannot be obtained, the story cannot proceed to a next story so that game property is improved.

The invention is not limited to the above embodiment modes, but can be variously modified within the scope of features of the present invention.

For example, in the above example, the behavior of the character is determined by associating the tension values with the contents ("exaggeration", "usual" and "moderate") of the parameters. However, the tension values and the behavior of the character may be directly associated with each other (e.g., the size of the eyes is classified into 0 to 100), and the tension values may be also used as parameters as they are.

Further, the appearance and the hardware construction of the entertainment apparatus 10 are not limited to those shown in Figs. 8 and 9. For example, the entertainment apparatus 10 may have the constitution of a general electronic computer including a CPU, a memory, an external memory device such as a hard disk unit, a reader for reading data from a memory medium having portability such as CD-ROM, DVD-ROM, etc., input devices such as a keyboard, a mouse, a microphone, etc., a display unit such as a display, etc., a data communication device for performing communication through a network such as the Internet, etc., and an interface for transmitting and receiving data between the above respective devices. This case may employ a constitution in which the program and various kinds of data for constructing the constitution shown in Fig. 1 onto the entertainment apparatus 10 are read from the memory medium having the portability through the reader, and are stored in the memory or the external storage device. Otherwise, the program and these data may be downloaded from the network through a data communication device, to be stored in the memory or the external memory device.

As described above, in accordance with the present invention, it is possible to realize a game in which the character makes real-time reactions to inputs of voices.

## Claims

1. An entertainment apparatus with which a voice input device for receiving a voice input from a player is usable, the entertainment apparatus comprising
character control means for controlling the operation of a game character;
sound interval extracting means for extracting information of a relative sound interval from the voice of the player received through said voice input device; and
sound volume extracting means for extracting information of a sound volume from the voice of the player received through said voice input device;
wherein said character control means evaluates said extracted information of the relative sound interval and makes the character perform an operation according to a result of the evaluation.

2. The entertainment apparatus according to claim 1, which further comprises;
guide display means for indicating contents of the voice to be inputted by the player.

3. The entertainment apparatus according to claim 2, which further comprises;
reference voice data storage means for storing voice data as an evaluation reference about the relative sound interval and the sound volume with respect to the voice to be inputted by the player, wherein;
said character control means periodically compares said extracted information of the relative sound interval and said extracted information of the sound volume with the voice data as said evaluation reference, and determines operation contents of the character on the basis of results of the comparison.

4. The entertainment apparatus according to claim 2, which further comprises;
expression mode display means for indicating an expression mode of the voice to be inputted by the player.

5. The entertainment apparatus according to claim 3, wherein
the operation of said character is shown by regenerating image data prepared in advance, and
said character control means changes a regenerating speed of said image data on the basis of the difference between timing for indicating contents of the voice to be inputted by said player and timing for starting the input of the voice by the player.

6. The entertainment apparatus according to claim 3, wherein
said character control means compares said extracted information of the relative sound interval and the voice data of the relative sound interval as said evaluation reference, and, as a result of the comparison,
said character control means exaggerates an expression of the character as the extracted relative sound interval is higher than the relative sound interval as the evaluation reference, and moderates the expression of the character as the extracted relative sound interval is lower than the relative sound interval as the evaluation reference.

7. The entertainment apparatus according to claim 3, wherein
said character control means compares said extracted information of the sound volume and the voice data of the sound volume as said evaluation reference, and as a result of this comparison, said control means exaggerates a behavior of the character as the extracted sound volume is larger than the sound volume as the evaluation reference, and moderates the behavior of the character as the extracted sound volume is smaller than the sound volume as the evaluation reference.

8. A method for controlling the operation of a character in a game executed by an entertainment apparatus, comprising:
extracting information of a relative sound interval and information of a sound volume from voice data of a player upon receipt of a voice input of the player, and
changing the operation of the character on the basis of said extracted information of the relative sound interval and said extracted information of the sound volume.

9. The method for controlling the operation of a character as recited in claim 8, wherein
contents of the voice to be inputted by the player are displayed before the reception of the voice input of the player.

10. The method for controlling the operation of a character as recited in claim 9, wherein
said extracted information of the relative sound interval and said extracted information of the sound volume are periodically compared with the voice data as an evaluation reference with respect to the relative sound interval and the sound volume prepared in advance, and the change in the operation of said character is determined on the basis of a result of the comparison.

11. The method for controlling the operation of a character as recited in claim 9, wherein
an expression mode of the voice to be inputted by the player is displayed together with the contents of the voice to be inputted by said player before the reception of the voice input of the player.

12. The method for controlling the operation of a character as recited in claim 10, wherein
the operation of said character is shown by regenerating image data prepared in advance, and
a regenerating speed of said image data is changed on the basis of the difference between timing for outputting the contents of the voice to be inputted by said player, and timing for starting the input of the voice by the player.

13. The method for controlling the operation of a character as recited in claim 10, wherein said extracted information of the relative sound interval and the voice data of the relative sound interval as said evaluation reference are compared, and as a result, an expression of the character is exaggerated as the extracted relative sound interval is higher than the relative sound interval as the evaluation reference, and the expression of the character is set to be moderate as the extracted relative sound interval is lower than the relative sound interval as the evaluation reference.

14. The method for controlling the operation of a character as recited in claim 10, wherein said extracted information of the sound volume and the voice data of the sound volume as said evaluation reference are compared, and as a result, a behavior of the character is exaggerated as the extracted sound volume is larger than the sound volume as the evaluation reference, and the behavior of the character is moderated as the extracted sound volume is smaller than the sound volume as the evaluation reference.

15. A storage medium having a program recorded therein, said program executable in an entertainment apparatus to be usable with a voice input device for receiving a voice input from a player,
wherein said program causes the entertainment apparatus to perform the steps of:
sound interval extracting processing for extracting information of a relative sound interval from the voice of the player received through said voice input device;
sound volume extracting processing for extracting information of a sound volume from the voice of the player received through said voice input device; and
character control processing for evaluating said extracted information of the relative sound interval and said extracted information of the sound volume, and making the character perform an operation according to a result of the evaluation.

16. The storage medium according to claim 15, wherein
said program causes the entertainment apparatus further to perform guide display processing for indicating contents of the voice to be inputted by the player.

17. The storage medium according to claim 16, wherein
said program causes the entertainment apparatus further to perform processing for referring to reference voice data for storing voice data as an evaluation reference about the relative sound interval and the sound volume with respect to the voice to be inputted by the player, and
in said character control processing, said extracted information of the relative sound interval and said extracted information of the sound volume are periodically compared with the voice data as said evaluation reference, and results of the comparison determine operation contents of the character.

18. The storage medium according to claim 16, wherein
said program causes the entertainment apparatus further to perform expression mode display processing for indicating an expression mode of the voice to be inputted by the player.

19. The storage medium according to claim 17, wherein
the operation of said character is shown by regenerating image data prepared in advance, and
said character control processing includes changing a regenerating speed of said image data on the basis of the difference between timing for indicating contents of the voice to be inputted by said player and timing for starting the input of the voice by the player.

20. The storage medium according to claim 17, wherein
said character control processing includes comparing said extracted information of the relative sound interval and the voice data of the relative sound interval as said evaluation reference, and as a result, exaggerating an expression of the character as the extracted relative sound interval is higher than the relative sound interval as the evaluation reference, and moderating the expression of the character as the extracted relative sound interval is lower than the relative sound interval as the evaluation reference.

21. The storage medium according to claim 17, wherein
said character control processing includes comparing said extracted information of the sound volume and the voice data of the sound volume as said evaluation reference, and as a result, exaggerating a behavior of the character as the extracted sound volume is larger than the sound volume as the evaluation reference, and moderating the behavior of the character as the extracted sound volume is smaller than the sound volume as the evaluation reference.

22. A program executable in an entertainment apparatus to be usable with a voice input device for receiving a voice input from a player,
wherein said program causes the entertainment apparatus to perform the steps of:
sound interval extracting processing for extracting information of a relative sound interval from the voice of the player received through said voice input device;
sound volume extracting processing for extracting information of a sound volume from the voice of the player received through said voice input device; and
character control processing for evaluating said extracted information of the relative sound interval and said extracted information of the sound volume, and making the character perform an operation according to a result of the evaluation.
